(19) **Europäisches Patentamt / European Patent Office / Office européen des brevets**

(11) **EP 2 797 249 B1**

(12) **EUROPEAN PATENT SPECIFICATION**

(45) Date of publication and mention
of the grant of the patent:
**20.04.2016  Bulletin 2016/16**

(51) Int Cl.:
*H04L 1/00* (2006.01)      *H04L 1/20* (2006.01)
*H04L 1/18* (2006.01)

(21) Application number: **13305533.5**

(22) Date of filing: **23.04.2013**

(54) **Method and system for configuring retransmission parameters**

Verfahren und System zur Konfiguration von Neuübertragungsparametern

Procédé et système de configuration de paramètres de retransmission

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.10.2014  Bulletin 2014/44**

(73) Proprietor: **ALCATEL LUCENT**
**92100 Boulogne-Billancourt (FR)**

(72) Inventors:
• **Dardenne, Xavier**
**1390 Grez-Doiceau (BE)**

• **Drooghaag, Benoit**
**1421 Ophain-Bois-Seigneur-Isaac (BE)**

(74) Representative: **ALU Antw Patent Attorneys**
**Copernicuslaan 50**
**2018 Antwerpen (BE)**

(56) References cited:
**EP-A2- 1 901 470        EP-A2- 2 068 481**
**US-A1- 2009 177 938    US-A1- 2013 021 931**
**US-B1- 6 718 493**

## Description

Technical field

Embodiments of the invention relate to the field of physical layer retransmission, and in particular to the field of configuring physical layer retransmission parameters.

Background

Nowadays, many DSL operators and service providers resort to automated dynamic line management (DLM) systems. These systems enable an automatic reconfiguration of DSL lines, depending on observed line performance and possibly varying noise environment. Typically, line performance (achieved bitrate, ...) and stability (number of resynchronizations, transmission errors) are observed during a given period of time, and the line is reconfigured in the event that the performance or stability can be increased. This reconfiguration can be performed either by configuring new profiles (containing all configuration parameters), or by reconfiguring one or several of these configuration parameters separately.

Although the automatic reconfiguration of parameters is known, there does not exist a suitable method for the automatic reconfiguration of physical layer retransmission parameters related to Impulse Noise Protection (INP).

Traditionally, DSL lines are protected against impulse noise by resorting to a Forward Error Correction + Interleaver (IFEC) mechanism, consisting in using Reed-Solomon (RS) codewords and a data interleaver. The configuration of the required level of INP is relatively easy, as only two parameters are involved: minINP, representing the minimum number of consecutive symbols that can be corrected; and maxDelay representing the maximum delay allowed for the interleaver. The values for these two parameters cannot be chosen totally independently, because some constraints apply on the INP/Delay ratio. Hence, the number of possible IFEC configurations is relatively limited, and automated IFEC reconfiguration on DSL lines can be carried out by existing techniques. However, a drawback of the IFEC mechanisms is that this type of INP is constantly consuming bandwidth. Indeed, the RS coding adds some data overhead that must be transmitted with user data, which can significantly reduce the effective data rate available for user traffic, especially when a high level of INP is required.

Recently, DSL service providers have started testing and deploying a new standard technique for improved protection against impulse noise. This technique is following the ITU-T G.998.4 standard and is also known as G.INP, RTX, or Automatic Repeat Query (ARQ). It consists in a retransmission mechanism at physical layer level. An advantage of RTX versus IFEC lies in the fact that the bit rate overhead needed for data retransmission is only used when necessary. This implies that when impulse noise level is low, and retransmission is not required, no overhead is used and the full net data rate is available for user traffic. However, RTX has the drawback that a good configuration is not straightforward in view of the many configuration parameters and the fact that the effective data rate available for user traffic is not constant because it depends on the amounts of retransmissions needed. Apparatuses and methods for improving communication are known from US6718493, US2009/177938, US2013/021931 and EP2068481.

Summary

The object of embodiments of the present invention is to provide a method and a system capable of dealing in an efficient and robust way with the automatic configuration of configuration parameters for use in a retransmission method at the physical level, and in particular a new method and system for the automated dynamic reconfiguration of retransmission parameters for a physical layer retransmission method for enhancing impulse noise protection.

Preferred embodiments of the invention enable the automatic configuration of parameters related to the error correction capability, as well as those related to the effective data rate estimation.

According to an embodiment of the invention there is provided a method for automatic reconfiguration of physical layer retransmission parameters associated with a line, for enhanced impulse noise protection. The method comprises monitoring line performance of the line and obtaining at least one metric representative for impulse noise based on the monitoring; optimizing at least one physical layer retransmission parameter, based on the at least one metric; and reconfiguring the at least one physical layer retransmission parameter of the line.

By obtaining suitable impulse noise metrics through monitoring, the physical layer retransmission parameters can be automatically reconfigured, so that the retransmission can be performed in an optimal way at all times.

The at least one physical layer retransmission parameter preferably comprises at least two line stability parameters including a delay parameter representative for the delay allowed for retransmission of a data packet and a data rate parameter representative for the data rate at which the line can synchronize. If those two parameters are optimized the stability of the line can be guaranteed, also in case of a varying INP events.

Preferably monitoring the line performance comprises monitoring the errors and resynchronizations on the line.

The at least one obtained metric comprises preferably an error metric representative for the number of errors per unit of time and/or a resynchronization metric representative for the number of resynchronizations per unit of time. E.g. the error metric may be a mean time between errors (MTBE) calculated by dividing an observation interval duration by a monitored number of code violations. E.g. the resynchronization metric may be a mean time between resynchronizations (MTBR) calculated by dividing an observation interval duration by a monitored number of resynchronizations. The error and resynchronization metrics correspond directly to problems observed by the user, and allow for a good optimization of the physical layer retransmission parameters.

Preferably the optimizing comprises increasing/decreasing the delay parameter and/or increasing/decreasing the data rate parameter. Preferably the monitoring, optimizing and reconfiguring are repeated until the error metric is above a predefined threshold and the resynchronization parameter is above a predefined threshold.

Preferably the delay parameter is a maximum delay parameter indicating a maximum delay allowed for retransmissions. Alternatively the delay parameter may be a Single High Impulse Noise Environment (SHINE) parameter indicating an expected number of consecutive DMT symbols affected by SHINE, e.g. minINP_SHINE as defined below. The data rate parameter is preferably a maximum net data rate parameter, e.g. maxNDR as defined below, indicating a maximum net data rate at which the line can synchronize.

Preferably, optimizing the delay parameter comprises decreasing or increasing the delay parameter with an amount equal to the round trip time or a multiple thereof, and/or setting the delay parameter to the round trip time or a multiple thereof. The round trip time corresponds with the time needed to issue a retransmission request of a data transmission unit and to retransmit the requested data transmission unit. For that reason the allowed delay between retransmissions is preferably a multiple of the round trip time (RTT).

According to a preferred embodiment monitoring the line performance further comprises measuring parameters suitable for estimating an error-free throughput metric representative for the net data rate minus the data rate needed for retransmissions. Suitable parameters are e.g. an error-free bits counter or a minimum error-free throughput value. The error-free throughput metric is computed using the measured parameters. Further the monitoring may comprise collecting metrics representative for the net data rate and the expected throughput (the net data rate minus the expected retransmission overhead). Preferably, optimizing the at least one physical layer retransmission parameter comprises optimizing a single high impulse noise environment (SHINE) parameter representative for a duration of SHINE events and/or optimizing a repetitive impulse noise (REIN) parameter representative for a duration of REIN events, based on the computed error-free throughput metric and the collected net data rate and expected throughput. In that way also parameters affecting the expected throughput reporting, without impact on the line stability, are optimized.

In a preferred embodiment the SHINE parameter indicates an expected amount of overhead necessary for retransmission of DTUs affected by SHINE (e.g. the Shineratio parameter as defined below), and the REIN parameter indicates an expected number of consecutive DMT symbols affected by REIN (e.g. the minINP_REIN parameter as defined below).

When SHINE and REIN parameters are involved, the optimizing may comprise increasing the SHINE parameter if an absolute value of a difference between the expected throughput and the computed error-free throughput metric is larger than a predefined threshold as long as the SHINE parameter is within a predefined range. Further, the optimizing may comprise increasing the REIN parameter if the SHINE parameter is too high, and decreasing the REIN parameter if the SHINE parameter is too low. In that way the expected throughput can be made to approach the computed error-free throughput as required.

According to a further aspect of the invention, there is provided a computer device or other hardware device programmed to perform one or more optimizing and/or reconfiguring steps of any one of the embodiments of the method disclosed above. According to another aspect there is provided a data storage device encoding a program in machine-readable and machine-executable form to perform one or more optimizing and/or reconfiguring steps of any one of the embodiments of the method disclosed above.

According to yet another aspect of the invention there is provided a system for automatic reconfiguration of physical layer retransmission parameters associated with a line, for enhanced impulse noise protection, comprising a monitoring and obtaining module configured for monitoring line performance of the line and for obtaining at least one metric representative for impulse noise based on the monitored line performance; an optimizing module configured for optimizing at least one physical layer retransmission parameter, based on the at least one metric; and a reconfiguring module configured for reconfiguring the at least one physical layer retransmission parameter of the line.

Preferably the monitoring and obtaining modules is configured for monitoring the transmission errors and/or spontaneous resynchronizations on the line, and for obtaining an error metric representative for the number of errors per unit of time and/or a resynchronization metric representative for the number of resynchronizations per unit of time.

Preferably, the optimizing module is configured for optimizing at least two line stability parameters including a delay parameter representative for a delay allowed for retransmission of a data packet and a data rate parameter representative for the data rate at which the line can synchronize, wherein the optimizing consists in increasing/decreasing the delay parameter and/or increasing/decreasing the data rate parameter. Preferably the delay parameter is a maximum delay parameter indicating a maximum delay allowed for retransmissions. The data rate parameter is preferably a maximum net data rate parameter indicating a maximum net data rate at which the line can synchronize.

Preferably, the system further comprises a controller for controlling the monitoring, optimizing and reconfiguring module to repeat the monitoring, optimizing and reconfiguring until the error metric is above a predefined threshold and the resynchronization parameter is above a predefined threshold.

The optimizing module may be further configured for optimizing the delay parameter by decreasing or increasing the delay parameter with an amount equal to the round trip time or a multiple thereof, and/or by setting the delay parameter to the round trip time or a multiple thereof.

According to a further developed embodiment the monitoring and obtaining module may be further configured for measuring parameters suitable for estimating an error-free throughput metric representative for the net data rate minus the data rate needed for retransmissions; for computing the error-free throughput metric using said measured parameters; and for collecting metrics representative for the net data rate and the expected throughput being the net data rate minus the expected overhead. The optimizing module may be further configured for optimizing a single high impulse noise environment (SHINE) parameter representative for a duration of SHINE events and/or optimizing a repetitive impulse noise (REIN) parameter representative for a duration of REIN events, based on the computed error-free throughput metric and the collected net data rate and expected throughput. Preferably, the SHINE parameter indicates an expected amount of overhead necessary for retransmission of data transmission units affected by SHINE, and the REIN parameter indicates an expected maximum number of consecutive discrete multi-tone symbols affected by REIN. Typically the optimizing module is adapted for increasing the SHINE parameter if an absolute value of a difference between the expected throughput and the computed error-free throughput metric is larger than a predefined threshold as long as the SHINE parameter is within a predefined range, and/or for increasing the REIN parameter if the resulting SHINE parameter would be too high, and decreasing the REIN parameter if the resulting SHINE parameter would be too low.

Embodiments of the system or computer program product or computer device of the invention may be implemented as a DLM system, or as a part of a DLM system.

Brief description of the figures

The accompanying drawings are used to illustrate presently preferred non-limiting exemplary embodiments of methods and systems of the present invention. The above and other advantages of the features and objects of the invention will become more apparent and the invention will be better understood from the following detailed description when read in conjunction with the accompanying drawings, in which:

Figure 1 is a graph of the error-free throughput in function of time in a SHINE only environment;
Figure 2 is a graph of the error-free throughput in function of time in a SHINE + REIN environment;
Figure 3 illustrates schematically an embodiment of a system and method of the invention;
Figure 4 is a flow chart illustrating a first embodiment of the method of the invention including INP optimization;
Figure 5 is a flow chart illustrating a second embodiment of the method of the invention including ETR optimization; and
Figure 6 is a flow chart illustrating a third embodiment of the method of the invention including ETR optimization.

The standard technique for improved protection against impulse noise, also known as the ITU-T G.998.4 standard, G.INP, RTX, or Automatic Repeat Query (ARQ), consists in a retransmission mechanism at physical layer level. When a packet of data, called Data Transmission Unit (DTU), is corrupted, it can be automatically and seamlessly retransmitted. An advantage of RTX is that the bit rate overhead needed for data retransmission is only used when data retransmission is needed. This implies that when impulse noise level is low, and retransmission is not required, no overhead is used and the full net data rate is available for user traffic. However, RTX has some drawbacks:

- generally many parameters need to be configured to make this technique works efficiently;
- the effective data rate available for user traffic is not constant, because it depends on the amount of needed retransmissions.

The physical level retransmission standard provides means to estimate this effective data rate, but this estimation is strongly dependent on some configuration parameters, which are supposed to be set according to the a-priori unknown and possibly varying impulse noise environment. As accurate data rate estimation is of prime importance for service providers e.g. in order to decide what services can be offered, it is desirable to have efficient methods for configuring these parameters.

Embodiments of the invention provide a method for the automated dynamic reconfiguration of physical level retransmission parameters.

To give the reader a better insight in embodiments of the invention, first some concepts of physical level retransmission for enhancing INP and DLM will be recalled.

The ITU-T G.998.4 standard defines the following variables and configuration parameters:

- Net Data Rate (NDR) representing the total bit rate available on the line when no retransmission occurs. This is the data rate at which the line is synchronized;

- Error-Free Throughput (EFTR) representing the actual data rate available for user traffic. It consists in the NDR minus the overhead needed for retransmissions. When no retransmission occurs, EFTR equals NDR. Hence EFTR will vary depending on impulse noise conditions, and is not directly reported by the management layers;

- minINP_SHINE representing a configuration parameter describing the expected maximum number of consecutive Discrete Multi-Tone (DMT) symbols that could be affected by Single High Impulse Noise Environment (SHINE) events, i.e. isolated bursts of impulse noise. In other words, it describes the minimum level of impulse noise protection (INP) against SHINE events, required for error-free transmission in the expected noise conditions;

- minINP_REIN representing a configuration parameter describing the expected maximum number of consecutive DMT symbols that could be affected by Repetitive Impulse Noise (REIN), i.e. impulse noise occurring at a given rate. This rate can be configured through the Inter-Arrival Time for REIN (IAT_REIN)) parameter and usually corresponds to 100 Hz in Europe and 120 Hz in North America. minINP_REIN then also describes the minimum level of INP against REIN, required for error-free transmission in the expected noise conditions;

- Shineratio (SHINE_OH) representing a configuration parameter describing the amount of overhead that is expected to be necessary for retransmission of corrupted DTUs that have been affected by SHINE. This ratio is given as a percentage of the NDR and can be configured between 0.1% and 10%;

- Retransmission overhead (RTX_OH) representing the proportion of the NDR that is used for retransmission of corrupted DTUs, and which is then not available for user traffic. In the G.INP standard, the expected overhead is computed as follows:

$$RTX\_OH = SHINE\_OH + REIN\_OH + STAT\_OH$$

where SHINE_OH (Shineratio) is the expected overhead needed to mitigate SHINE events; REIN_OH is the expected overhead needed to mitigate REIN events and is computed from minINP_REIN; and STAT_OH is the expected overhead needed to mitigate stationary noise. An approximation of REIN_OH can be obtained, assuming a data symbol rate of 4000 symb/s: REIN_OH $\approx$ (minINP_REIN/40) + $\alpha$, where $\alpha$ is an a-priori unknown quantity, ranging from 1.25% to 10% and depending on framing parameters. STAT_OH is assumed by the standard to be $10^{-4}$;

- Expected Throughput (ETR) being computed during modem synchronization and representing the EFTR that would be obtained if noise conditions are exactly requiring the expected amount of overhead, as computed from configured Shineratio and minINP_REIN. ETR is computed as follows:

$$ETR = (1-RTX\_OH)*NDR.$$

Hence, if the actual amount of overhead needed for retransmissions is less than what was expected, NDR >= EFTR > ETR. If the actual amount of overhead needed for retransmissions is exactly what was expected, NDR > EFTR = ETR, and if the actual amount of overhead needed for retransmissions is higher than what was expected, one have NDR > ETR > EFTR. In other words, ETR is an estimation, computed during synchronization, of the data rate available for user traffic (EFTR), based on the assumption that the configured noise conditions correspond to the observed noise. However, the exact noise conditions are never known a priori by operators, and hence, the ETR can significantly over- or underestimate the actual EFTR. A problem resides in the fact that, in order to decide the type of service that could be offered on a given line, operators rely on the reported ETR. Hence, this ETR should be as close as possible to the actual average EFTR observed on the line. Therefore, an adequate configuration of certain RTX parameters such as Shineratio and minINP_REIN is desirable;

- minEFTR reporting the minimum EFTR observed over a given observation interval, e.g. 15 min., 1 hour, 1 day, etc. The considered EFTR is the averaged value over 1 second window;

- EFbits representing a counter of the number of Error-Free bits transmitted during a given observation interval. By dividing the increase of this counter over an observation interval by the duration of this interval, an estimation of the average EFTR achieved over this interval is obtained.

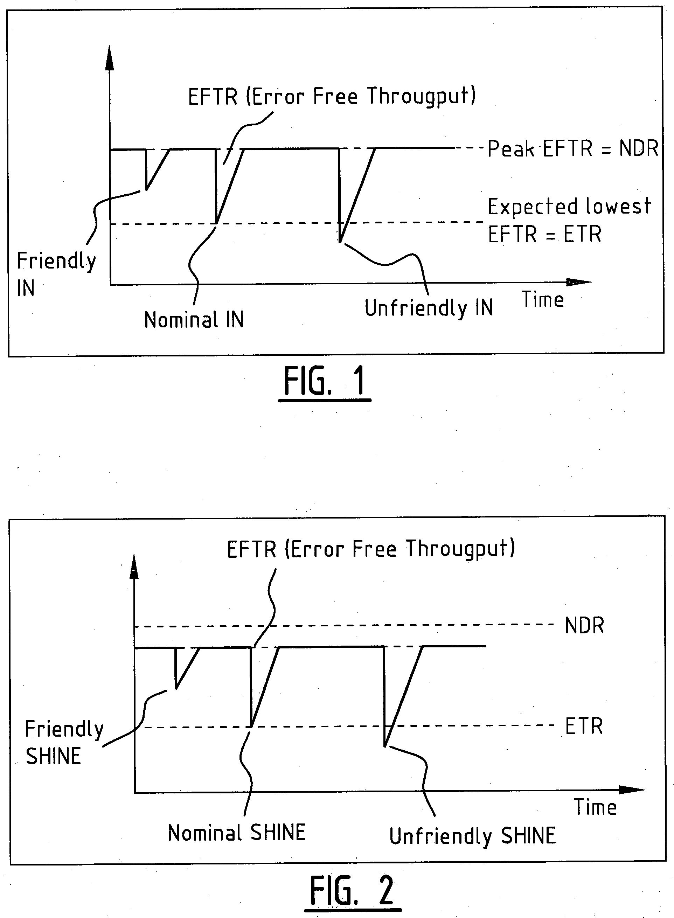

Figures 1 and 2 illustrate how EFTR and ETR are related in SHINE only and SHINE+REIN situations respectively.

As illustrated in Figure 1, in a SHINE only environment, when no retransmission is needed, the EFTR equals NDR because no overhead is used. In case of impulse noise bursts, three situations may arise:

- a "Friendly impulse noise (IN)" situation where the burst is short enough so that the overhead needed for retransmissions is lower than the configured Shineratio; in that case the EFTR will drop during the retransmissions but remains above the ETR.
- a ."Nominal IN" situation where the burst is longer and requires an amount of overhead that exactly matches the configured Shineratio; in that case the EFTR drops at ETR level during the retransmissions.
- a "Unfriendly IN" situation where the burst is so long that the overhead provision is not sufficient; in that case the EFTR will drop below the ETR during the retransmissions.

Figure 2 describes a situation where SHINE and REIN events are both present. The only difference with the SHINE only situation is that REIN events require a constant amount of retransmissions. Hence, even when there is no SHINE event, the EFTR is below the NDR.

Figures 1 and 2 show that the typical noise conditions that a line will have to handle must be known in advance in order to correctly configure Shineratio and minINP_REIN to obtain a correct ETR. Obviously, noise is usually not known a priori. Hence, a dynamic reconfiguration method is desirable.

Dynamic Line Management (DLM) is a process enabling automatic monitoring and reconfiguration of DSL lines. DLM methods include two steps: performance monitoring and reconfiguration.

Performance monitoring typically comprises monitoring line performance and line stability. Line performance is monitored during a given period of typically one or several days. Monitored line performance parameters can include actual data rates, number of transmission errors, number of resynchronizations, noise level, etc. Line stability is usually measured by counting the number of CPE spontaneous resynchronizations and the number of transmission errors, i.e. the number of Coding Violations (CVs). The metrics used are often the Mean Time Between Resynchronization (MTBR) and the Mean Time Between Errors (MTBE). The MTBE can be defined in different ways, depending on what is considered to be a transmission error. The MTBR or MTBE can be obtained e.g. by dividing the observation interval duration by the number of spontaneous resynchronizations or by the number of CVs that occurred during this interval, respectively. As an alternative, instead of monitoring the MTBR, the noise margin could be measured as another metric that is representative for the stability of the line. However, the MTBR is usually preferred as this is a metric that is directly related to what the customers experience. A bad MTBR is often an indication that the stationary noise level may sometimes become higher than the available noise margin. In order to increase the MTBR, a solution is to increase the available noise margin by reducing the bit rate at which the line synchronizes. On the other hand, a bad MTBE is usually an indication that the line is affected by impulse noise. This problem can be addressed by increasing the level of INP.

Based on the monitored performance a line reconfiguration may be performed. If during the monitoring period it is noticed that line performance can be improved, a reconfiguration request is sent to the DSLAM. This reconfiguration can take different aspects. For instance, it can comprise switching configuration profiles of the line, where the candidate profiles are chosen within a predefined set of profiles. In other systems, the reconfiguration can comprise reconfiguring one or several parameters of the lines independently.

Taking into account the insights regarding the retransmission concepts and DLM concepts described above, embodiments of the invention will now be described in more detail. Embodiments of the method typically comprise the configuration of retransmission parameters affecting line stability, as well as the configuration of retransmission parameters affecting data rate (ETR) reporting, typically without having an impact on the stability.

Embodiments of the invention are based *inter alia* on the insight that the retransmission parameters influencing the line stability are maxNDR representing the maximum Net Data Rate and maxDelay representing the maximum delay allowed for retransmissions.

The parameter maxNDR is used to limit the bit rate at which the line can synchronize, and as a consequence to increase the available noise margin. Hence, this parameter will mainly impact the MTBR. To maximize performance, the maxNDR should be as high as possible, but to keep a sufficient noise margin and to limit the probability of resynchronization in case of variation of the stationary noise level, the maxNDR may not be too high.

The parameter maxDelay is used to increase the effective INP, and represents the maximum delay allowed for retransmitting DTUs corrupted by impulse noise. Hence, the higher this maximum delay, the more data can be retransmitted and therefore, the higher the INP protection. Therefore, this parameter will mainly impact the MTBE. The drawback of increasing maxDelay is that it increases the potential jitter in upper layer data streams. Indeed, the actual transmission delay is not constant. It varies between the configured minDelay, when no retransmission is needed, to maxDelay when the maximum amount of allowed retransmissions is required. So, in order to limit the potential jitter, maxDelay should be configured as low as possible while maintaining a sufficient MTBE.

It is noted that maxDelay is correlated with minINP_SHINE. maxDelay provides the CPE/DSLAM with an upper limit for the INP level that can be choosen, while minINP_SHINE providers a lower limit for the INP level against SHINE.

Hence, instead of using maxDelay, it is also possible to use minINP_SHINE as a line stability parameter representative for a delay allowed for retransmitting DTUs. If minINP_SHINE is varied maxDelay is preferably also changed in order to avoid synchronization problems, because minINP_SHINE puts a lower bound on the allowed values of maxDelay.

Embodiments of the invention are based *inter alia* on the insight that the retransmission parameters influencing ETR reporting comprise Shineratio, i.e. the expected percentage of NDR needed for retransmitting DTUs corrupted by SHINE events; minINP_REIN, i.e. the expected maximum number of consecutive DMT symbols corrupted by REIN events; and maxETR, i.e. the maximum allowed ETR.

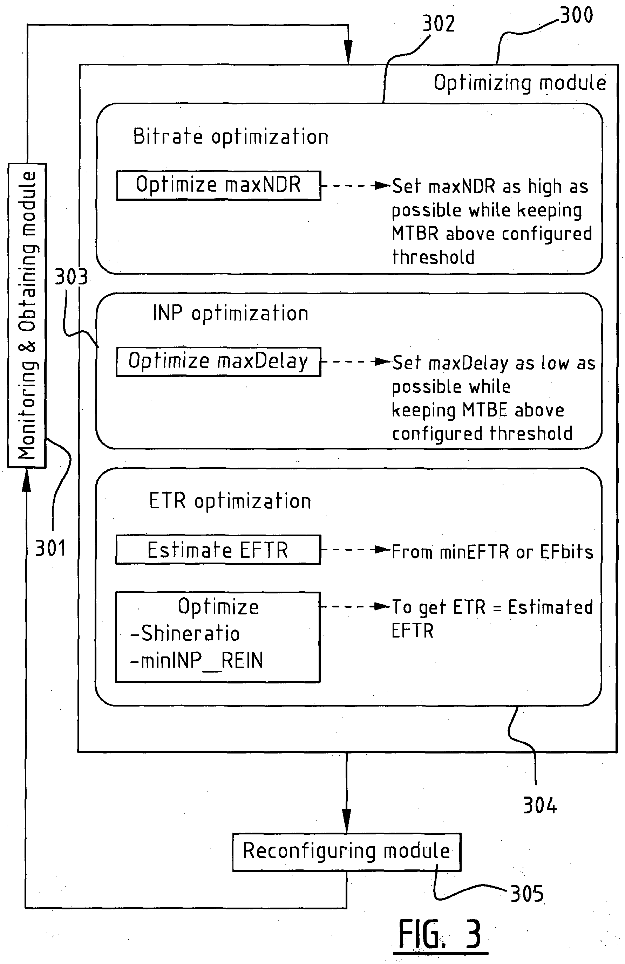

Preferred embodiments of the invention comprise an optimizing module 300 combining bit rate optimization 302 with INP optimisation 303 and ETR optimization 304, see Figure 3. However, the invention also encompasses optimization methods and systems comprising only one, or two of the three optimizations mentioned above. Through monitoring and obtaining module 301 a number of metrics is obtained. Using the obtained metrics any combination of optimizations 302, 303, 304 is performed, resulting in one or more changed retransmission parameters, whereupon the line is reconfigured by a reconfiguring module 305.

Embodiments of the method can be a part of a DLM engine for the automatic monitoring and reconfiguration of DSL lines. Hence, the line being optimized can be constantly under monitoring by module 301, i.e. operational parameters are collected on a regular basis and stability metrics are regularly computed.

Bit rate or NDR optimization 302 typically uses the MBTR metric obtained through the monitoring module 301. This optimization comprises pushing the parameter NDR as high as possible while maintaining an acceptable level for the MTBR, i.e. MTBR should be higher than a minimum preconfigured threshold. If MTBR is below the minimum threshold configured by the operator, NDR is reduced until MTBR increases to an acceptable level. Preferably, the bit rate optimization results in a value for the maximum Net Data Rate (maxNDR) corresponding to the maximum allowed bit rate, i.e. the maximum bit rate allowed by an operator. Several state of the art methods can be used in DLM systems to optimize the bit rate, from the simplest trial and error approach to more advanced techniques including the computation of theoretically achievable line performance (theoretical bit rate), based on the estimation of noise conditions.

The INP level optimization 303 typically uses the MTBE metric obtained through the monitoring module 301, and may comprise finding the minimum level of INP required to get an MTBE above a given preconfigured threshold, as required by the operator. The level of INP is related to the maximum amount of delay allowed for retransmissions. Therefore, a preferred INP level optimization comprises automatically incrementing the maxDelay parameter until the observed MTBE is higher than the preconfigured threshold.

When a transmitted DTU was corrupted, a request is sent from the receiver to the transmitter to send again this DTU. The time needed to issue this request and retransmit the DTU is called the "Round Trip Time" (RTT). Hence, preferably the maxDelay should have a value higher than or equal to the RTT. If maxDelay equals the RTT, each DTU could be retransmitted only once. In such a case, if a retransmitted DTU gets corrupted again, there is no time left for another retransmission and this DTU will be discarded, leading to transmission errors. Based on those considerations, maxDelay is preferably optimized such that it has a value corresponding to multiples of the RTT in order to enable multiple retransmissions. For DSL lines with tones spacing of 4.3125 kHz, the RTT is expected to lie between 4-5 ms. In the following, as an example, a conservative approach is followed assuming that the RTT is 6 ms.

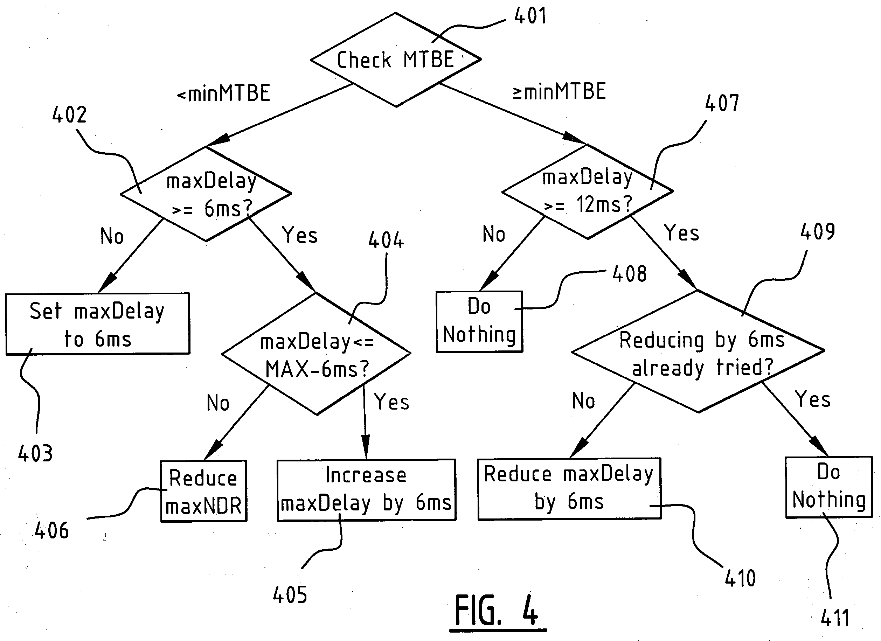

An example of a method for optimizing maxDelay is depicted in Figure 4 and explained hereafter. In a first step 401 it is verified if the MBTE obtained through monitoring is smaller than a predefined threshold minMTBE. Two situations may arise. Either the actual MTBE is sufficiently high (>= minMBTE), implying a sufficient INP protection level, or the actual MTBE is too low (< minMBTE), implying an INP level which is not sufficient.

When the MTBE is smaller than minMBTE, in a step 402 it is verified if the current maxDelay has a value below RTT (assumed to be 6 ms). If that is the case, which implies that there is virtually no INP, maxDelay is set to a value of 1 * RTT, see step 403. If maxDelay is larger than or equal to RTT, but below a (MAX - RTT), where MAX is a threshold configured by the operator, maxDelay is increased by a further step of 6 ms, see steps 404 and 405. If maxDelay in step 404 is larger than (MAX - RTT), NDR is reduced, see step 406.

In other words, if MTBE is smaller than minMBTE and maxDelay is smaller than RTT, maxDelay is first set to RTT, and if, after reconfiguration, MTBE is still below minMBTE, the maxDelay will be increased by steps of 6ms, as long as the maximum delay allowed by the operator (MAX) is not reached. In case the maximum allowed delay (MAX) is reached and MTBE is still too low, the only remaining solution consists in reducing the Net Data Rate (maxNDR), which will correspondingly increase the available noise margin, and hopefully mitigate the impulse noise effect.

When the MTBE is larger than or equal to minMBTE, in a step 407 it is verified if the current maxDelay has a value larger than or equal to 2* RTT. If that is the case, implying that the INP level is sufficient, maxDelay is reduced by RTT, unless reducing maxDelay has already been tried in a previous iteration of the method, see steps 409 and 410. If reducing maxDelay has already been tried in a previous iteration of the method and yielded an insufficient MTBE, nothing is done, see step 411, since the optimal configuration of maxDelay is achieved. If maxDelay is larger than or equal to 2 * RTT, the optimization is stopped and no reconfiguration of the maxDelay parameter is performed, see step 408. Reducing the maxDelay when it is at least 2 * RTT may have the advantage that the potential jitter in the upper transmission layers can be minimized.

The proposed exemplary INP optimization method is an iterative process. So, reconfigurations are based on the line performance metrics observed over the past one or several monitoring periods. As long as previously tested configurations and their outcome (effect on stability) are remembered - since those are required for step 409 -, the exemplary optimization process of Figure 4 will eventually converge towards the optimal configuration of maxDelay.

It should be noted that the proposed method of Figure 4 is exemplary, and that other variants are possible. For instance in case of a bad MTBE, in order to try stabilizing the line as quickly as possible, the maxDelay could directly be configured at its maximum value allowed by the operator (MAX). Then, gradually decreasing values could be tested, instead of testing gradually increasing values.

ETR optimization 304 can be split in two sub-steps. The first one comprises evaluating the EFTR of the line, and the second step comprises tuning the retransmission parameters to get the ETR as close as possible to the observed EFTR. Depending on the operator's needs, the EFTR can be evaluated in different ways. If an operator considers the ETR as the minimum guaranteed bit rate that should be available for user traffic, then its reported value should be close to the smallest EFTR observed during the monitoring period. In such a case, the minEFTR values reported during the observation interval could be considered. On the other hand, if an operator considers the ETR as an average bit rate that should be available for user traffic, then its reported value should be close to the average EFTR observed during the monitoring period. So, the EFTR could be computed from the EFbits counter.

Once the EFTR has been estimated, the second sub-step then consists in tuning the retransmission parameters to get the reported ETR as close as possible to the computed EFTR. From the estimated EFTR, the overhead that was needed for retransmitting DTUs can be estimated, using

$$\text{RTX\_OH} = (1 - \text{EFTR/NDR}) * 100\%$$

According to the G.INP standard, this overhead is computed in terms of retransmission configuration parameters as follows:

$$\text{SHINE only: RTX\_OH} = \text{Shineratio} + 0.01\%$$

$$\text{SHINE + REIN: RTX\_OH} = \text{Shineratio} + \text{REIN\_OH} + 0.01\%$$

where Shineratio and REIN_OH are expressed in %, and REIN_OH may be approximated, assuming a symbol rate of 4000 symb/s, to be at least minINP_REIN * 2.5%

Knowing that Shineratio can be configured between 0.1% and 10%, the optimal retransmission configuration parameters can be obtained as follows:

- if computed RTX_OH <= 10%, set Shineratio = RTX_OH and minINP_REIN = 0
- if computed RTX_OH > 10%, iteratively increase minINP_REIN until the remaining overhead is below 10%, then set Shineratio at a value corresponding to the remaining overhead.

After convergence, this iterative exemplary process will result in ETR = EFTR.

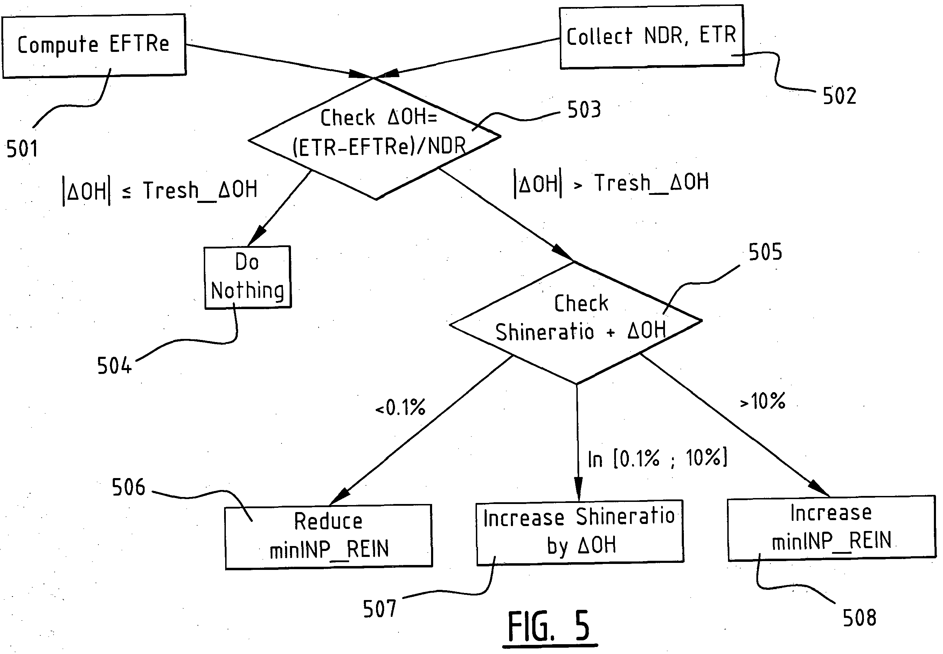

An exemplary method for optimization of parameters affecting the ETR reporting and is depicted in Figure 5. In a first step 501 an estimation of the Error-Free Throughput (EFTR), defined as EFTRe in Figure 5, is computed. Then, the two retransmission parameters "Shineratio" and "minINP_REIN" are optimized in order to match the ETR as closely as possible to the EFTRe, see steps 503-508, using the metrics NDR and ETR obtained through monitoring, see step 502.

The EFTR is not directly reported, but can be estimated, for instance by using an Error-Free bits counter (EFbits) or a minimum EFTR value (minEFTR), depending on whether the operator wants the ETR to represent the average achievable EFTR or the minimum guaranteed EFTR. An EFbits counter counts the number of bits transmitted flawlessly over a given period of time. The value of this counter can be retrieved periodically during monitoring and divided by the period duration. This provides an estimation of the average EFTR observed during each observation interval. Then it is possible to compute a probability distribution of the observed EFTR and compute EFTRe, for instance as the average value or the xx% worst case. A minEFTR value represents the minimum EFTR values observed over a given period of time (for example 15 min, or 1 hour). By collecting the minEFTR values periodically, the value below which the EFTR never drops can be determined and used as EFTRe. In order to avoid making computations based on a very low EFTRe (close to zero) that happens only rarely during very strong bursts of noise, one could for instance, discard the worst or two worst values.

Now the optimization of the two retransmission parameters "Shineratio" and "minINP_REIN" is discussed, see steps 503-508. The purpose of this process is to get the ratio EFTRe/ETR as close to one as possible. If the observed ratio is below one, this means that the RTX overhead (RTX_OH) is underestimated and hence, the ETR is overestimated. If this ratio is above one, the RTX_OH is overestimated and the ETR underestimated. Once the EFTRe is known, the real observed overhead RTX_OH_obs can be calculated and compared to the overhead expected from retransmission configuration RTX_OH_exp. The observed overhead can be estimated by:

$$\text{RTX\_OH\_obs} = 1 - \text{EFTRe/NDR}$$

The expected overhead can be calculated as:

$$\text{RTX\_OH\_exp} = 1 - \text{ETR/NDR}$$

Their difference is the overhead correction that should be applied to get ETR = EFTRe:

$$\Delta\text{OH} = (\text{ETR} - \text{EFTRe})/\text{NDR}$$

In step 503 the absolute value of this overhead correction $\Delta$OH is first compared to a preconfigured threshold Tresh_$\Delta$OH, and the optimization (steps 504-508) is only performed if the correction is higher than Tresh_$\Delta$OH. The purpose of this test is to avoid continuous oscillations of the configuration when ETR is already close to EFTRe. A typical value for Thresh_OH is around 2 to 5%. A lower value would increase the final ETR accuracy, but would simultaneously increase the probability of oscillations.

If the required overhead correction is sufficiently large to trigger a reconfiguration, the most direct way of controlling the overhead is through the tuning of Shineratio, see step 507. In the exemplary embodiment of Figure 5 the currently configured Shineratio is corrected with $\Delta$OH, as long as the resulting value lies within the allowed range, typically from 0.1% to 10%, see the discussion above about the Shineratio. If the resulting Shineratio would be higher than 10%, this probably means that some REIN is affecting the transmission, and the solution is to first increase minINP_REIN, see step 508. If the correction is below 0.1%, including negative values, this means that minINP_REIN is configured at a too high value and should be decreased, see step 506.

Again, the exemplary method depicted in Figure 5 must be seen as an iterative process, and the computations performed during each iteration may be based on one or several previous monitoring periods. When only the Shineratio needs to be adapted, the optimal configuration is expected to be achieved in only one iteration. In cases where minINP_REIN must be tuned, as the exact amount of overhead introduced by the minINP_REIN setting is not a priori known, an additional iteration may be necessary to adapt the Shineratio value.

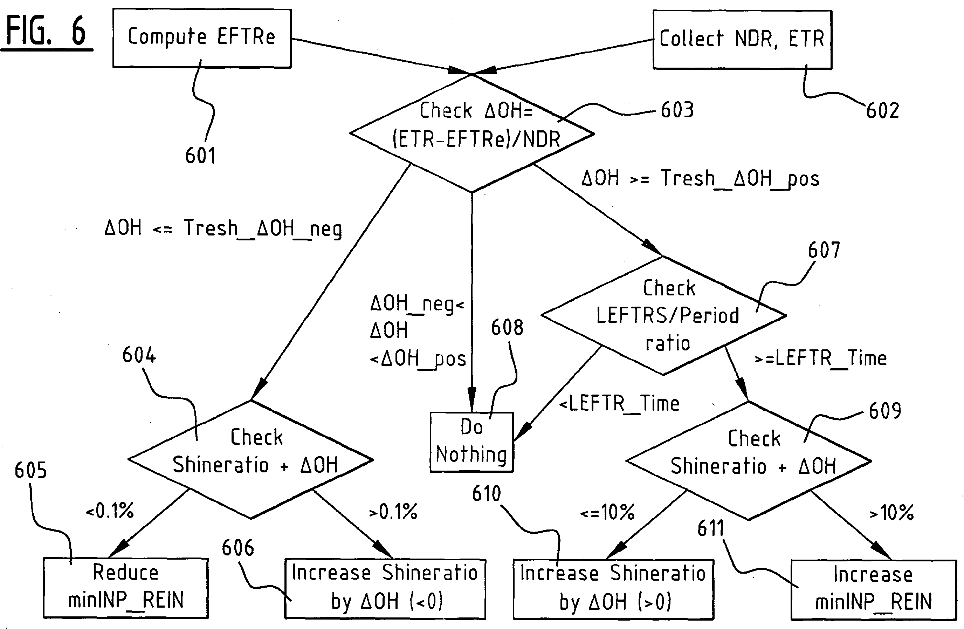

It should be noted that the proposed method of Figure 5 is merely exemplary, and that other variants are possible. According to a variant illustrated in Figure 6, two different overhead thresholds Thresh_$\Delta$OH_pos and Thresh_$\Delta$OH_neg are used, see step 603. Steps 601 and 602 are identical to steps 501 and 502, and steps 604, 605 and 606 are similar to steps 505, 506 and 508, and for those steps reference is made to the discussion above. From the operators' point of view, overestimating the overhead may be less critical than underestimating it. Indeed, as the announced bit rate is based on the ETR, announcing a bit rate lower than what the customer effectively gets is unlikely to cause customer complaints. Hence, choosing Thresh_$\Delta$OH_neg higher in absolute value than Thresh_$\Delta$OH_pos could reduce the number of reconfigurations. Further, a "Low Error-Free Throughput Seconds" (LEFTRS) counter may be taken into account when an overhead correction is positive, see step 607, in order to avoid some potentially undesirable reconfigurations. According to the G.INP standard, a "Low Error-Free Throughput" event is flagged when the EFTR, averaged over one second, is below a given threshold. A LEFTRS counter counts those events that occurred over a given period of time. The default threshold lies at 0.998*ETR, but can be reconfigured as a fraction of NDR. Considering the default threshold, the LEFTRS counter is a measure for the amount of time the LEFTR was below the ETR. With that knowledge, an operator may decide that having the LEFTR below the ETR for only a small fraction of time would be acceptable. Hence, a reconfiguration would only be triggered if the LEFTR was below the ETR during a significant (configurable) fraction of the monitoring time, see steps 607-611. LEFTR_Time is the minimum fraction of time with LEFTR < ETR required to trigger a reconfiguration. The fraction of time where LEFTR was below ETR can be estimated by the ratio LEFTR/Period, where "Period" is the period of time within which the LEFTRS counter has been observed.

As previously mentioned, in order to minimize jitter in the applicative layers, the maxDelay is optimized to be as low as possible, while keeping the MTBE at an acceptable level. It is further possible to limit the jitter to an acceptable level configured by the operator, by configuring a minimum allowed delay (minDelay). If, for instance the maximum allowed jitter is "maxJitter", the minDelay could be automatically configured at minDelay = maxDelay - maxJitter, whenever maxDelay is reconfigured.

Returning to Figure 3, it is noted that bit rate optimization, INP optimization and ETR optimization may be done independently or in parallel. E.g. the following scenarios are conceivable. In a first step the MTBR could be checked. In case of a bad MTBR, a possibility would be to optimize first maxNDR, optionally in parallel with an ETR optimization, followed by a reconfiguration, and then to optimize the INP level. Alternatively, in case of a bad MTBR, optimizing the bit rate and the INP level could be done in parallel, optionally further in parallel with an ETR optimization, followed by a reconfiguration. In case of good MBTR, first a bit rate optimization may be performed. In most cases this will not result in a change of the configuration parameters so that in most cases a reconfiguration will not be needed. The bit rate optimization may be followed by an INP level optimization and an ETR optimization which may be performed in parallel. From the examples above it will be understood that embodiments of the method and system of the invention enable the automatic configuration of parameters related to the error correction capability, as well as those related to the effective data rate estimation. Also, the proposed method can easily be implemented as a DLM system, or at least as a part of a DLM system. Embodiments of the method of the invention can be seen as a DLM method dedicated to retransmission line parameters. The proposed methods can be used as standalone procedures or they can be implemented as a part of more general DLM engines.

A person of skill in the art would readily recognize that steps of various above-described methods can be performed by programmed computers. Herein, some embodiments are intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as a magnetic disks or tapes, hard drives, or optically readable digital data storage media. The embodiments are also intended to cover computers programmed to perform said steps of methods described herein.

Whilst the principles of the invention have been set out above in connection with specific embodiments, it is to be understood that this description is merely made by way of example and not as a limitation of the scope of protection which is determined by the appended claims.

## Claims

1. Method for automatic reconfiguration of physical layer retransmission parameters associated with a line, for enhanced impulse noise protection, comprising:

   monitoring line performance (401) of the line and obtaining at least one metric representative for impulse noise based on the monitored line performance;
   optimizing (403-406) at least one physical layer retransmission parameter, based on the at least one metric;
   reconfiguring (408-411) the at least one physical layer retransmission parameter of the line,

   **characterized in that** the monitoring the line performance comprises:

   measuring parameters suitable for estimating an errorfree throughput metric representative for a net data rate minus a data rate needed for retransmissions;
   computing (501) the error-free throughput metric using said measured parameters;
   collecting metrics (502) representative for the net data rate and an expected throughput being the net data rate minus an expected overhead;

   and wherein the optimizing at least one physical layer retransmission parameter comprises at least one of:

   optimizing (503-508) a single high impulse noise environment, SHINE, parameter representative for a duration of SHINE events and optimizing (503-508) a repetitive impulse noise, REIN, parameter representative for a duration of REIN events, based on the computed error-free throughput metric and the collected metrics representative for the net data rate and the expected throughput.

2. Method of claim 1, wherein the at least one physical layer retransmission parameter comprises at least two line stability parameters including a delay parameter representative for a delay allowed for retransmission of a data packet and a data rate parameter representative for the data rate at which the line can synchronize.

**3.** Method of claim 1 or 2, wherein monitoring the line performance comprises at least one of monitoring the errors and resynchronizations on the line, and wherein the at least one obtained metric comprises at least one of an error metric representative for the number of errors per unit of time and a resynchronization metric representative for the number of resynchronizations per unit of time.

**4.** Method of claim 2 and 3, wherein the optimizing comprises at least one of increasing or decreasing the delay parameter and increasing or decreasing the data rate parameter, and wherein the monitoring, optimizing and reconfiguring are repeated until the error metric is above a predefined threshold and the resynchronization metric is above a predefined threshold.

**5.** Method of claim 3 or 4, wherein the error metric is a mean time between errors calculated by dividing an observation interval duration by a monitored number of errors.

**6.** Method of claim 3, 4 or 5, wherein the resynchronization metric is a mean time between resynchronizations calculated by dividing an observation interval duration by a monitored number of resynchronizations.

**7.** Method of claim 2 or 4, wherein the delay parameter is a maximum delay parameter indicating a maximum delay allowed for retransmissions or a Single High Impulse Noise Environment, SHINE, parameter indicating an expected maximum number of consecutive discreet multi-tone symbols affected by SHINE; or wherein the data rate parameter is a maximum net data rate parameter indicating a maximum net data rate at which the line can synchronize.

**8.** Method of claim 2, 4 or 7, wherein the line is associated with a round trip time corresponding with the time needed to issue a retransmission request of a data transmission unit and to retransmit the requested data transmission unit, and wherein optimizing the delay parameter comprises at least one of decreasing or increasing the delay parameter with an amount equal to the round trip time or a multiple of the round trip time, and setting the delay parameter to the round trip time or a multiple of the round trip time.

**9.** Method of any one of the previous claims, wherein the SHINE parameter indicates at least one of an expected amount of overhead necessary for retransmission of data transmission units affected by SHINE, and an expected number of consecutive discrete multi-tone symbols affected by REIN.

**10.** Method of any one of the previous claims, wherein the optimizing comprises increasing the SHINE parameter if an absolute value of a difference between the expected throughput and the computed error-free throughput metric is larger than a predefined threshold as long as the SHINE parameter is within a predefined range.

**11.** Method of any one of the previous claims, wherein the optimizing comprises increasing the REIN parameter if the SHINE parameter is too high, and decreasing the REIN parameter if the SHINE parameter is too low.

**12.** Computer device or other hardware device programmed to perform the steps of the method of any one of the previous claims.

**13.** Data storage device encoding a program in machine-readable and machine-executable form to perform the steps of the method of any one of the previous claims.

**14.** System for automatic reconfiguration of physical layer retransmission parameters associated with a line, for enhanced impulse noise protection, comprising:

a monitoring and obtaining module (301) configured for monitoring line performance of the line and for obtaining at least one metric representative for impulse noise based on the monitored line performance;
an optimizing module (300) configured for optimizing at least one physical layer retransmission parameter, based on the at least one metric;
a reconfiguring module (305) configured for reconfiguring the at least one physical layer retransmission parameter of the line

**characterized in that** the monitoring and obtaining module is further configured for:

measuring parameters suitable for estimating an errorfree throughput metric representative for a net data rate minus a data rate needed for retransmissions;

computing the error-free throughput metric using said measured parameters;
collecting metrics representative for the net data rate and an expected throughput being the net data rate minus an expected overhead;

and wherein the optimizing module if further configured for at least one of:

optimizing a single high impulse noise environment, SHINE, parameter representative for a duration of SHINE events and optimizing a repetitive impulse noise, REIN, parameter representative for a duration of REIN events, based on the computed error-free throughput metric and the collected net data rate and expected throughput.

15. System of claim 14, wherein
the monitoring and obtaining modules (301) is configured for monitoring the errors and resynchronizations on the line, and for obtaining an error metric representative for the number of errors per unit of time and a resynchronization metric representative for the number of resynchronizations per unit of time;
the optimizing module (300) is configured for optimizing at least two line stability parameters including a delay parameter representative for a delay allowed for retransmission of a data packet and a data rate parameter representative for the data rate at which the line can synchronize, wherein the optimizing comprises increasing or decreasing the delay parameter and increasing or decreasing the data rate parameter; and
wherein the system further comprises a controller for controlling the monitoring, optimizing and reconfiguring module to repeat the monitoring, optimizing and reconfiguring until the error metric is above a predefined threshold and the resynchronization parameter is above a predefined threshold.

## Patentansprüche

1. Verfahren zur automatischen Neukonfiguration von Neuübertragungsparametern einer physikalischen Schicht in Verbindung mit einer Leitung für einen verbesserten Impulsgeräuschschutz, umfassend:

Überwachen der Leitungsleistung (401) der Leitung und Erhalten von mindestens einer Metrik, die bezeichnend ist für Impulsgeräusche basierend auf der überwachten Leitungsleistung;
Optimieren (403-406) von mindestens einem Neuübertragungsparameter der physikalischen Schicht basierend auf der mindestens einen Metrik;
Neukonfigurieren (408-411) des mindestens einen Neuübertragungsparameters der physikalischen Schicht der Leitung,
**dadurch gekennzeichnet, dass** das Überwachen der Leitungsleistung Folgendes umfasst:

Messen von Parametern, die geeignet sind zum Schätzen einer fehlerfreien Durchsatzmetrik, die bezeichnend ist für eine Netz-Datenrate minus einer Datenrate, die für Neuübertragungen erforderlich ist;
Berechnen (501) der fehlerfreien Durchsatzmetrik unter Verwendung der besagten gemessenen Parameter;
Erfassen von Metriken (502), die bezeichnend sind für die Netz-Datenrate und einen erwarteten Durchsatz, welcher die Netz-Datenrate minus eines erwarteten Overheads ist;

und wobei das Optimieren von mindestens einem Neuübertragungsparameter der physikalischen Schicht mindestens eines aus Folgendem umfasst:

Optimieren (503-508) einer einzelnen Hoch-Impulsgeräusch-Umgebung, SHINE, eines Parameters, der bezeichnend ist für eine Dauer von SHINE-Ereignissen, und Optimieren (503-508) eines repetitiven Impulsgeräuschs, REIN, eines Parameters, der bezeichnend ist für eine Dauer von REIN-Ereignissen, basierend auf der berechneten fehlerfreien Durchsatzmetrik und den erfassten Metriken, die bezeichnend sind für die Netz-Datenrate und den erwarteten Durchsatz.

2. Verfahren nach Anspruch 1, wobei der mindestens eine Neuübertragungsparameter der physikalischen Schicht mindestens zwei Leitungsstabilitätsparameter umfasst, einschließlich eines Verzögerungsparameters, der bezeichnend ist für eine Verzögerung, die für die Neuübertragung eines Datenpakets erlaubt ist, und eines Datenratenparameters, der bezeichnend ist für die Datenrate, bei der die Leitung synchronisieren kann.

3. Verfahren nach Anspruch 1 oder 2, wobei das Überwachen der Leitungsleistung mindestens eines aus Überwachen der Fehler und Neusynchronisationen der Leitung umfasst, und wobei die mindestens eine erhaltene Metrik mindestens eine aus einer Fehlermetrik, die bezeichnend ist für die Anzahl von Fehlern pro Zeiteinheit, und einer Neusynchronisationsmetrik umfasst, die bezeichnend ist für die Anzahl von Neusynchronisationen pro Zeiteinheit.

4. Verfahren nach Anspruch 2 und 3, wobei das Optimieren mindestens eines aus Erhöhen oder Verringern des Verzögerungsparameters und Erhöhen oder Verringern des Datenratenparameters umfasst, und wobei das Überwachen, Optimieren und Neukonfigurieren wiederholt werden, bis die Fehlermetrik über einem vorausdefinierten Grenzwert liegt und die Neusynchronisationsmetrik über einem vorausdefinierten Grenzwert liegt.

5. Verfahren nach Anspruch 3 oder 4, wobei die Fehlermetrik eine mittlere Zeit ist zwischen Fehlern, die durch Dividieren einer Beobachtungsintervalldauer durch eine überwachte Anzahl von Fehlern berechnet wird.

6. Verfahren nach Anspruch 3, 4 oder 5, wobei die Neusynchronisationsmetrik eine mittlere Zeit ist zwischen Neusynchronisationen, die durch Dividieren einer Beobachtungsintervalldauer durch eine überwachte Anzahl von Neusynchronisationen berechnet wird.

7. Verfahren nach Anspruch 2 oder 4, wobei der Verzögerungsparameter ein maximaler Verzögerungsparameter ist, der eine maximale Verzögerung angibt, die für Neuübertragungen erlaubt ist, oder eine einzelne Hoch-Impulsgeräusch-Umgebung, SHINE, ein Parameter, der eine erwartete maximale Anzahl von aufeinanderfolgenden diskreten Mehrton-Symbolen angibt, die durch SHINE beeinflusst werden; oder wobei der Datenratenparameter ein Parameter der maximalen Netz-Datenrate ist, der eine maximale Netz-Datenrate angibt, bei der die Leitung synchronisieren kann.

8. Verfahren nach Anspruch 2, 4 oder 7, wobei die Leitung in Zusammenhang steht mit einer Round-Trip-Zeit, die der Zeit entspricht, die zum Ausgeben einer Neuübertragungsanfrage einer Datenübertragungseinheit und zum Neuübertragen der angefragten Datenübertragungseinheit erforderlich ist, und wobei das Optimieren des Verzögerungsparameters mindestens eines aus Erhöhen oder Verringern des Verzögerungsparameters um einen Betrag, der gleich ist wie die Round-Trip-Zeit oder ein Vielfaches der Round-Trip-Zeit, und Setzen des Verzögerungsparameters auf die Round-Trip-Zeit oder ein Vielfaches der Round-Trip-Zeit umfasst.

9. Verfahren nach einem beliebigen der vorstehenden Ansprüche, wobei der SHINE-Parameter mindestens eines aus einem erwarteten Overhead-Betrag, der zur Neuübertragung von Datenübertragungseinheiten erforderlich ist, die durch SHINE beeinflusst werden, und einer erwarteten Anzahl von aufeinanderfolgenden diskreten Mehrton-Symbolen angibt, die durch REIN beeinflusst werden.

10. Verfahren nach einem beliebigen der vorstehenden Ansprüche, wobei das Optimieren das Erhöhen des SHINE-Parameters umfasst, wenn ein absoluter Wert einer Differenz zwischen dem erwarteten Durchsatz und der berechneten fehlerfreien Durchsatzmetrik größer ist als ein vorausdefinierter Grenzwert, solange der SHINE-Parameter innerhalb eines vorausdefinierten Bereichs liegt.

11. Verfahren nach einem beliebigen der vorstehenden Ansprüche, wobei das Optimieren das Erhöhen des REIN-Parameters umfasst, wenn der SHINE-Parameter zu hoch ist, und das Verringern des REIN-Parameters, wenn der SHINE-Parameter zu niedrig ist.

12. Computergerät oder sonstiges Hardware-Gerät, das programmiert ist zum Durchführen der Schritte des Verfahrens nach einem beliebigen der vorstehenden Ansprüche.

13. Datenspeichergerät, das ein Programm in maschinenlesbarer und maschinenausführbarer Form zum Durchführen der Schritte des Verfahrens nach einem beliebigen der vorstehenden Ansprüche codiert.

14. System zur automatischen Neukonfiguration von Neuübertragungsparametern einer physikalischen Schicht in Verbindung mit einer Leitung für einen verbesserten Impulsgeräuschschutz, umfassend:

ein Überwachungs- und Erhaltungsmodul (301), das ausgelegt ist zum Überwachen der Leitungsleistung der Leitung und zum Erhalten von mindestens einer Metrik, die bezeichnend ist für Impulsgeräusche basierend auf der überwachten Leitungsleistung;
ein Optimierungsmodul (300), das ausgelegt ist zum Optimieren von mindestens einem Neuübertragungsparameter der physikalischen Schicht basierend auf der mindestens einen Metrik;
ein Neukonfigurationsmodul (305), das ausgelegt ist zum Neukonfigurieren des mindestens einen Neuübertragungsparameters der physikalischen Schicht der Leitung,

**dadurch gekennzeichnet, dass** das Überwachungs- und Erhaltungsmodul weiterhin ausgelegt ist zum:

Messen von Parametern, die geeignet sind zum Schätzen einer fehlerfreien Durchsatzmetrik, die bezeichnend ist für eine Netz-Datenrate minus einer Datenrate, die für Neuübertragungen erforderlich ist;
Berechnen der fehlerfreien Durchsatzmetrik unter Verwendung der besagten gemessenen Parameter;
Erfassen von Metriken, die bezeichnend sind für die Netz-Datenrate und einen erwarteten Durchsatz, welcher die Netz-Datenrate minus eines erwarteten Overheads ist;

und wobei das Optimierungsmodul weiterhin für mindestens eines aus Folgendem ausgelegt ist:

Optimieren einer einzelnen Hoch-Impulsgeräusch-Umgebung, SHINE, eines Parameters, der bezeichnend ist für eine Dauer von SHINE-Ereignissen, und Optimieren eines repetitiven Impulsgeräuschs, REIN, eines Parameters, der bezeichnend ist für eine Dauer von REIN-Ereignissen, basierend auf der berechneten fehlerfreien Durchsatzmetrik und der erfassten Netz-Datenrate und dem erwarteten Durchsatz.

**15.** System nach Anspruch 14, wobei
das Überwachungs- und Erhaltungsmodul (301) ausgelegt ist zum Überwachen der Fehler und Neusynchronisationen der Leitung und zum Erhalten einer Fehlermetrik, die bezeichnend ist für die Anzahl von Fehlern pro Zeiteinheit, und einer Neusynchronisationsmetrik, die bezeichnend ist für die Anzahl von Neusynchronisationen pro Zeiteinheit;
das Optimierungsmodul (300) ausgelegt ist zum Optimieren von mindestens zwei Leitungsstabilitätsparametern, einschließlich eines Verzögerungsparameters, der bezeichnend ist für eine Verzögerung, die für die Neuübertragung eines Datenpakets erlaubt ist, und eines Datenratenparameters, der bezeichnend ist für die Datenrate, bei der die Leitung synchronisieren kann, wobei das Optimieren das Erhöhen oder Verringern des Verzögerungsparameters und Erhöhen oder Verringern des Datenratenparameters umfasst; und
wobei das System weiterhin einen Controller zum Steuern des Überwachungs-, Optimierungs- und Neukonfigurationsmoduls umfasst, um das Überwachen, Optimieren und Neukonfigurieren zu wiederholen, bis die Fehlermetrik über einem vorausdefinierten Grenzwert liegt und der Neusynchronisationsparameter über einem vorausdefinierten Grenzwert liegt.

## Revendications

**1.** Procédé de reconfiguration automatique des paramètres de réémission de couche physique associés à une ligne, en vue d'une protection améliorée contre le bruit impulsionnel, comprenant les étapes suivantes :

surveiller les performances de ligne (401) de la ligne et obtenir au moins une mesure représentative du bruit impulsionnel en se basant sur les performances de ligne surveillées ;
optimiser (403-406) au moins un paramètre de réémission de couche physique en se basant sur l'au moins une mesure ;
reconfigurer (408-411) l'au moins un paramètre de réémission de couche physique de la ligne,

**caractérisé en ce que** la surveillance des performances de ligne comprend les étapes suivantes :

mesurer les paramètres appropriés pour estimer une mesure du débit sans erreur représentative d'un débit de données net moins un débit de données nécessaire pour les réémissions ;
calculer (501) la mesure du débit sans erreur en utilisant lesdits paramètres mesurés ;
collecter des mesures (502) représentatives du débit de données net et d'un débit attendu qui est le débit de données net moins un surdébit attendu ;

et selon lequel l'optimisation d'au moins un paramètre de réémission de couche physique comprend au moins une opération parmi les suivantes :

optimiser (503-508) un paramètre d'environnement de bruit impulsionnel élevé unique, SHINE, représentatif d'une durée des événements SHINE, et optimiser (503-508) un paramètre de bruit impulsionnel répétitif, REIN, représentatif d'une durée des événements REIN, en se basant sur la mesure du débit sans erreur calculé et les mesures collectées représentatives du débit de données net et du débit attendu.

**2.** Procédé selon la revendication 1, selon lequel l'au moins un paramètre de réémission de couche physique comprend au moins deux paramètres de stabilité de ligne incluant un paramètre de retard représentatif d'un retard autorisé pour la réémission d'un paquet de données et un paramètre de débit de données représentatif du débit de données auquel peut se synchroniser la ligne.

**3.** Procédé selon la revendication 1 ou 2, selon lequel la surveillance des performances de la ligne comprend au moins une opération parmi la surveillance des erreurs et la resynchronisation de la ligne, et selon lequel l'au moins une mesure obtenue comprend au moins une parmi une mesure d'erreur représentative du nombre d'erreurs par unité de temps et une mesure de resynchronisation représentative du nombre de resynchronisations par unité de temps.

**4.** Procédé selon les revendications 2 et 3, selon lequel l'optimisation comprend au moins une opération parmi l'augmentation ou la diminution du paramètre de retard et l'augmentation ou la diminution du paramètre de débit de données, et selon lequel la surveillance, l'optimisation et la reconfiguration sont répétées jusqu'à ce que la mesure d'erreur soit supérieure à un seuil prédéfini et la mesure de resynchronisation soit supérieure à un seuil prédéfini.

**5.** Procédé selon la revendication 3 ou 4, selon lequel la mesure d'erreur est une durée moyenne entre les erreurs calculée en divisant la durée d'un intervalle d'observation par un nombre d'erreurs surveillé.

**6.** Procédé selon la revendication 3, 4 ou 5, selon lequel la mesure de resynchronisation est une durée moyenne entre les resynchronisations calculée en divisant la durée d'un intervalle d'observation par un nombre de resynchronisations surveillé.

**7.** Procédé selon la revendication 2 ou 4, selon lequel le paramètre de retard est un paramètre de retard maximum indiquant un retard maximum autorisé pour les réémissions d'un paramètre d'environnement de bruit impulsionnel élevé unique, SHINE, indiquant un nombre maximum attendu de symboles à multitonalité discrète consécutifs affectés par le SHINE ; ou selon lequel le paramètre de débit de données est un paramètre de débit de données net maximum indiquant un débit de données net maximum auquel la ligne peut se synchroniser.

**8.** Procédé selon la revendication 2, 4 ou 7, selon lequel la ligne est associée à un temps aller-retour correspondant au temps nécessaire pour délivrer une demande de réémission d'une unité d'émission de données et pour réémettre l'unité d'émission de données demandée, et selon lequel l'optimisation du paramètre de retard comprend au moins une opération parmi l'augmentation ou la diminution du paramètre de retard d'une valeur égale au temps aller-retour ou à un multiple du temps aller-retour et le réglage du paramètre au temps aller-retour ou à un multiple du temps aller-retour.

**9.** Procédé selon l'une quelconque des revendications précédentes, selon lequel le paramètre SHINE indique au moins un parmi un niveau attendu de surdébit nécessaire pour la réémission des unités d'émission de données affectées par le SHINE et un nombre attendu de symboles à multitonalité discrète consécutifs affectés par le REIN.

**10.** Procédé selon l'une quelconque des revendications précédentes, selon lequel l'optimisation comprend l'augmentation du paramètre SHINE si une valeur absolue de la différence entre le débit attendu et la mesure du débit sans erreur calculée est supérieure à un seuil prédéfini tant que le paramètre SHINE se trouve dans une plage prédéfinie.

**11.** Procédé selon l'une quelconque des revendications précédentes, selon lequel l'optimisation comprend l'augmentation du paramètre REIN si le paramètre SHINE est trop élevé et la diminution du paramètre REIN si le paramètre SHINE est trop bas.

**12.** Dispositif informatique ou autre dispositif matériel programmé pour exécuter les étapes du procédé selon l'une quelconque des revendications précédentes.

**13.** Dispositif de stockage de données codant un programme dans une forme lisible par machine et exécutable par machine pour exécuter les étapes du procédé selon l'une quelconque des revendications précédentes.

**14.** Système de reconfiguration automatique des paramètres de réémission de couche physique associés à une ligne, en vue d'une protection améliorée contre le bruit impulsionnel, comprenant :

un module de surveillance et d'obtention (301) configuré pour surveiller les performances de ligne de la ligne et pour obtenir au moins une mesure représentative du bruit impulsionnel en se basant sur les performances de ligne surveillées ;
un module d'optimisation (300) configuré pour optimiser au moins un paramètre de réémission de couche physique en se basant sur l'au moins une mesure ;
un module de reconfiguration (305) configuré pour reconfigurer l'au moins un paramètre de réémission de couche physique de la ligne,

**caractérisé en ce que** le module de surveillance et d'obtention est en outre configuré pour :

mesurer les paramètres appropriés pour estimer une mesure du débit sans erreur représentative d'un débit de données net moins un débit de données nécessaire pour les réémissions ;
calculer la mesure du débit sans erreur en utilisant lesdits paramètres mesurés ;
collecter des mesures représentatives du débit de données net et d'un débit attendu
qui est le débit de données net moins un surdébit attendu ;

et avec lequel le module d'optimisation est en outre configuré pour au moins une opération parmi les suivantes :

optimiser un paramètre d'environnement de bruit impulsionnel élevé unique, SHINE, représentatif d'une durée des événements SHINE, et optimiser un paramètre de bruit impulsionnel répétitif, REIN, représentatif d'une durée des événements REIN, en se basant sur la mesure du débit sans erreur calculé et sur le débit de données net et le débit attendu collectés.

15. Système selon la revendication 14, avec lequel
le module de surveillance et d'obtention (301) est configuré pour surveiller les erreurs et la resynchronisation de la ligne, et pour obtenir une mesure d'erreur représentative du nombre d'erreurs par unité de temps et une mesure de resynchronisation représentative du nombre de resynchronisations par unité de temps ;
le module d'optimisation (300) est configuré pour optimiser au moins deux paramètres de stabilité de ligne incluant un paramètre de retard représentatif d'un retard autorisé pour la réémission d'un paquet de données et un paramètre de débit de données représentatif du débit de données auquel peut se synchroniser la ligne, l'optimisation comprenant l'augmentation ou la diminution du paramètre de retard et l'augmentation ou la diminution du paramètre de débit de données ; et
avec lequel le système comprend en outre un contrôleur pour commander le module de surveillance, d'optimisation et de reconfiguration pour répéter la surveillance, l'optimisation et la reconfiguration jusqu'à ce que la mesure d'erreur soit supérieure à un seuil prédéfini et le paramètre de resynchronisation soit supérieur à un seuil prédéfini.

## FIG. 1

## FIG. 2

FIG. 3

FIG. 4

EP 2 797 249 B1

Compute EFTRe

Collect NDR, ETR

502

501

Check ΔOH=
(ETR-EFTRe)/NDR

503

|ΔOH| ≤ Tresh_ΔOH

|ΔOH| > Tresh_ΔOH

Do
Nothing

504

Check
Shineratio + ΔOH

505

<0.1%

In [0.1% ; 10%]

>10%

506

Reduce
minINP_REIN

Increase Shineratio
by ΔOH

Increase
minINP_REIN

507

508

## FIG. 5

FIG. 6

**EP 2 797 249 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6718493 B
- US 2009177938 A
- US 2013021931 A
- EP 2068481 A